# EUROPEAN PATENT APPLICATION

(11) **EP 2 522 602 A1**
(43) Date of publication of application: **14.11.2012**
(21) Application number: 11731781.8
(22) Date of filing: 04.01.2011
(51) Int. Cl.: B65G 47/31, B65G 13/04, B65G 43/00

(54) **ACCUMULATION CONVEYOR**

(30) Priority: 05.01.2010 JP 2010000622
(71) Applicant: Toyokanetsusolutions Kabushiki Kaisha, Tokyo 136-8666 (JP)
(72) Inventor: YOKOYA Juji, Tokyo 136-8666 (JP); AMEMIYA Kazuyuki, Tokyo 136-8666 (JP); MANAKA Yasuyuki, Tokyo 136-8666 (JP)
(74) Representative: Wijnstra, Reinier
(86) International application number: PCT/JP2011/050013
(87) International publication number: WO 2011/083783

(57) **Abstract**

With a simple structure, an accumulation conveyor can reduce the distance between articles to be conveyed, so as to improve its efficiency and conveyance efficiency. The accumulation conveyor 10 in accordance with the present invention comprises a motor 20, provided for each zone Z, for driving a carrier roller 18 constituting the zone Z to rotate; a sensor 22, provided for each zone Z, for detecting passing of an article C to be conveyed; and control means 26 for estimating according to detection information of two articles C1, C2 adjacent to each other detected by the sensor 22 distance information concerning the distance between the articles and switching, when the estimated distance information falls within a predetermined range, a control input to a motor 20n of a zone Zn conveying the article C2 at the back on the upstream side or a motor 20n+1 of a zone Zn+1 adjacent downstream thereto such that the zone Zn has a conveying speed faster than that of the zone Zn+1.

## Description

### Technical Field

The present invention relates to an accumulation conveyor.

### Background Art

Various accumulation conveyors have conventionally been known. Some conveyors can rotate or stop a number of rollers disposed along a direction in which articles are conveyed, so as to convey or stop the articles on the rollers (see, for example, the following Patent Literature 1).

A typical accumulation conveyor comprises a plurality of interconnected sub-conveyors. The accumulation conveyor is divided into a plurality of zones, while a sensor for detecting articles to be conveyed such as cases, a motor (or a roller with a built-in motor) for driving a sub-conveyor or sub-conveyors (i.e. rollers) within the zone, and the like are arranged in each zone. The rollers and the driving shaft of motor in each zone are connected with an endless belt, so as to rotate substantially in synchronization with each other.

In conventional accumulation conveyors, when a sensor in a zone detects that an article flowing from the upstream side enters the zone, it is determined whether or not to let the article go downstream according to circumstances such as whether or not its downstream zone is free of articles and whether or not articles in the downstream zone have started, whereby a motor is controlled so as to make it start or stop. As a result, only one article to be conveyed can be placed in one zone at a holding time.

### Citation List

### Patent Literature

Patent Literature 1: Japanese Patent Application Laid-Open No. 2002-302221

### Summary of Invention

### Technical Problem

However, the conventional accumulation conveyor disclosed in Patent Literature 1 can place only one article to be conveyed in one zone as mentioned above, so that a large gap may occur between articles, thereby reducing the amount of accumulation (retention) per fixed length. Also, since the optimal zone length varies depending on the size of articles, adjusting a zone pitch to the optimal length of the largest article when articles having various lengths may increase the gap between small articles more than necessary. This causes a problem of low efficiencies in accumulation and conveyance.

It is necessary for a plurality of articles retained on an accumulation conveyor to be let out at high speed when there is a high-speed sorter on the downstream side of the conveyor. However, gaps between the articles consume time for sorting out, thereby lowering the sort-out capacity.

For controlling the retention of articles by the unit of zone while only one article can be placed in one zone, the conventional accumulation conveyor requires one sensor, one motor (or one roller with a built-in motor), and control means for controlling the sensor and motor for each article, which makes the conveyor expensive per article.

It is therefore an object of the present invention to solve the problems mentioned above and provide an accumulation conveyor which, with a simple structure, can reduce the distance between articles to be conveyed, so as to improve efficiencies in accumulation and conveyance.

### Solution to Problem

For achieving the above-mentioned object, the accumulation conveyor in accordance with the present invention is an accumulation conveyor (10) for conveying or stopping an article to be conveyed (C) by controlling rotations of a plurality of carrier rollers (18), disposed parallel to each other so as to form a conveying path, in each of a plurality of zones (Z); the accumulation conveyor comprising drive means (20), provided for each zone (Z), for driving a carrier roller (18) constituting the zone (Z) to rotate; detection means (22), provided for each zone (Z), for detecting passing of the article (C); and control means (26) for controlling the drive means (20) so as to switch a conveying speed in the zone (Z) according to detected information from the detection means (22) such that a subsequent article to be conveyed (C) approaches a preceding article to be conveyed (C).

In particular, it is preferred for the control means (26) to be provided for each zone (Z). In this case, it is preferred for the control means (26) in each zone (Zn) to control the drive means (20n) in the zone (Zn) according to detected information from the respective detection means (22n-1, 22n, 22n+1) provided for the zone (Zn), a zone (Zn-1) adjacent upstream thereto, and a zone (Zn+1) adjacent downstream thereto.

The control means in each zone (Zn) may estimate distance information concerning a distance between the article (C) on the zone (Zn) and the article (C) on the zone (Zn+1) adjacent downstream thereto according to the detected information from the respective detection means (22n, 22n+1) provided for the zone (Zn) and the zone (Zn+1) adjacent downstream thereto and control the drive means (20n) of the zone (Zn) so as to increase a conveying speed in the zone (Zn) when the estimated distance information falls within a predetermined range.

The control means in each zone (Zn) may estimate distance information concerning a distance between the article (C) on the zone (Zn) and the article (C) on the zone (Zn-1) adjacent upstream thereto according to the detected information from the respective detection means (22n, 22n-1) provided for the zone (Zn) and the zone (Zn-1) adjacent upstream thereto and control the drive means (20n) of the zone (Zn) so as to decrease a conveying speed in the zone (Zn) when the estimated distance information falls within a predetermined range.

The control means may be provided solely and connected to the drive means (20) and detection means (22) in the zones (Z) through a network circuit, so as to control the drive means (20) and detection means (22) in each zone (Z) as mentioned above.

Such a structure makes the conveying speed of the article on the upstream side faster than that of the article on the downstream side, so that the upstream article can approach the downstream article, thereby favorably reducing the distance therebetween. Minimizing the distance between the articles can place a plurality of articles in one zone, so as to increase the amount of retention of articles per fixed length (e.g., per zone), thereby improving the accumulation efficiency. This can also convey a plurality of articles densely as a mass, so as to increase the amount of conveyance per fixed length, thereby improving the conveyance efficiency. Such a control can be achieved by simply switching a control input to the drive means for a first zone or the drive means for a second zone, so that complicated controls such as conventional speed feedback controls are unnecessary, whereby there are no restrictions on specs of constituents such as response speeds of drive means. As a result, a simple structure can favorably reduce the distance between articles to be conveyed and improve efficiencies in accumulation and conveyance.

Since the distance (gap) between articles to be conveyed can be made very small, even when there is a high-speed sorter on the downstream side of the accumulation conveyor, a plurality of articles retained on the conveyor can be let out to the sorter at high speed, whereby the sort-out time for the sorter can be minimized. It also eliminates the idea of retaining one article in one zone as in the conventional accumulation conveyors, so that the length of one zone can be set freely independently of the size of articles; for example, the length of one zone can be made greater, so as to reduce the number of motors, sensors, and control means in the whole conveyor, thereby cutting down the cost.

### Advantageous Effects of Invention

The accumulation conveyor in accordance with the present invention can favorably reduce the distance between articles to be conveyed and improve efficiencies in accumulation and conveyance, while having a simple structure.

### Brief Description of Drawings

**[****Fig. 1****]** is a schematic view illustrating a basic structure of the accumulation conveyor in accordance with an embodiment of the present invention;
**[****Fig. 2****]** is a schematic view illustrating a structure of a controller in the accumulation conveyor of the present invention;
**[****Fig. 3****]** is a flowchart illustrating processing executed by a control input switch unit of the controller illustrated in Fig. 2;
**[****Fig. 4****]** is a schematic view for explaining an operation of the accumulation conveyor of the present invention;
**[****Fig. 5****]** is a schematic view for explaining the operation of the accumulation conveyor of the present invention;
**[****Fig. 6****]** is a schematic view for explaining the operation of the accumulation conveyor of the present invention;
**[****Fig. 7****]** is a schematic view for explaining the operation of the accumulation conveyor of the present invention;
**[****Fig. 8****]** is a schematic view illustrating a structure employing an integrated controller in the accumulation conveyor of the present invention; and
**[****Fig. 9****]** is a schematic view illustrating another example of the structure employing an integrated controller in the accumulation conveyor of the present invention.

### Description of Embodiments

Now, preferred embodiments of the present invention will be explained in detail with reference to the drawings. In the drawings, the same or equivalent parts will be referred to with the same signs.

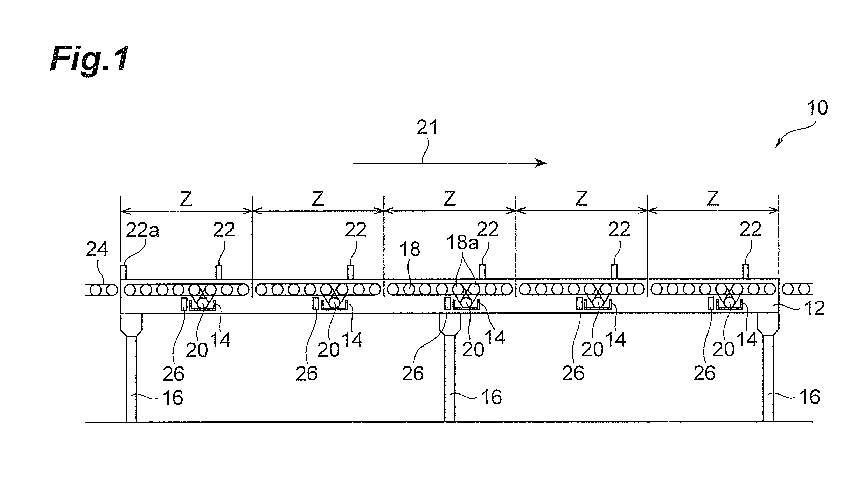

Referring to Fig. 1, a basic structure of an accumulation conveyor 10 in accordance with the present invention is illustrated. As shown in Fig. 1, the accumulation conveyor 10 comprises a pair of conveyor frames 12 arranged parallel to each other in a horizontal direction (only one of which being depicted in Fig. 1, while the other being arranged therebehind), support frames 14 connected between the conveyor frames 12 at their lower parts, leg members 16 connected between the lower parts of the conveyor frames 12 at a plurality of locations in the longitudinal direction of the conveyor frames 12, and the like.

A number of carrier rollers (hereinafter referred to as "rollers") 18 are disposed between the conveyor frames 12 along their longitudinal direction so as to be rotatable. These rollers 18 form a conveying path. The conveying path is divided into a plurality of zones (five zones in Fig. 1) in its conveying direction. The length of each zone Z is determined appropriately in view of the maximum and minimum lengths of target articles to be conveyed and the like.

For each zone, a motor (drive means) 20 attached to the support frame 14 is provided. The rotary axis of the motor 20 is connected to two drive rollers 18a adjacent thereto through endless belts, for example. The other rollers 18 are connected to each other in each pair of adjacent rollers through an endless belt, while the rollers adjacent to the drive rollers 18a are also connected thereto through endless belts. That is, in each zone Z, driving the motor 20 rotates all the rollers 18 in synchronization, thereby moving the articles on the conveying path.

While favorable examples of the motors 20 include highly-responsive brushless DC motors, other kinds of motors which are less responsive than the brushless DC motors can also be employed.

For preventing the articles from slipping on the rollers 18, getting trapped therebetween, and dropping therefrom, the accumulation conveyor in accordance with the present invention is of a belt conveyor type in which an endless belt is attached to each zone Z. In the belt conveyor used for such a purpose, the belt is preferably constituted by a highly frictional, highly elastic material such as urethane or rubber. From the viewpoint of cost and handling, coreless belts are effective.

Each zone Z is provided with a sensor (detection means) 22, which detects passing of the articles. As the sensor 22, a photoelectric one is preferred, while other types may also be used. Preferably, the sensor 22 is located closer to the downstream side of the zone Z, more specifically, distanced from the downstream end part of the zone by about half the length of the smallest article such that at least a part of the article is on the conveyor on the downstream side of the zone when the article passes the sensor 22.

A sensor 22a is further disposed at an upstream end part of the accumulation conveyor 10, so as to detect passing of the articles fed from a conveyor 24 on the upstream side, thus making it possible to sense the entering of the articles onto the accumulation conveyor 10.

Each zone Z is provided with a controller (control means) 26 for controlling the driving of the motor 20 in the zone Z. The controller 26 is constructed such as to be able to control the motor 20 to drive it forward and backward, accelerate and decelerate it, adjust its speed, and so forth. The controller 26 also controls the motor 20 in the zone Z according to information such as sensor information acquired from the sensor 22 and motor driving states in its adjacent zones Z acquired from the controllers 26 on the upstream and downstream sides. The controller 26 provided for each zone Z is communicably connected to the controllers 26 of its adjacent zones Z, so as to be able to transmit/receive information to/from the upstream and downstream zones, for example.

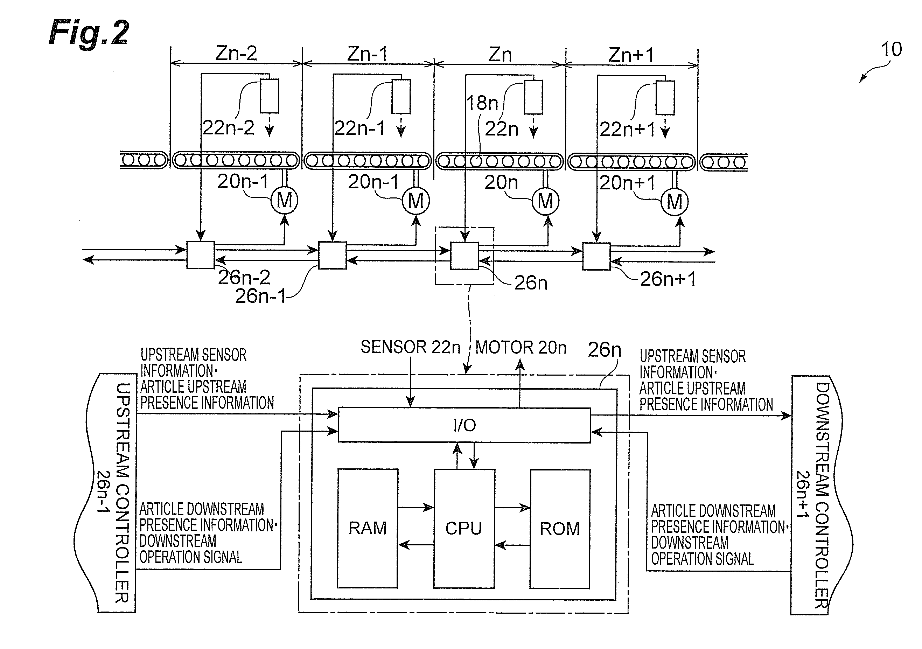

Operations of the accumulation conveyor 10 in accordance with the present invention will now be explained with reference to Figs. 2 to 7. While character "Z" and the like have suffixes as appropriate in Figs. 2 to 7 and the following explanation, the suffixes indicate positions and the like of zones when those on the uppermost stream side are indicated by 1. That is, the upstream zone adjacent to a given zone Zn is referred to as Zn-1, and its upper stream ones are referred to as Zn-2, Zn-3, ... in sequence. The downstream zone adjacent to the zone Zn is referred to as Zn+1, and its more downstream ones are referred to as Zn+2, Zn+3, ... in sequence. Suffix n is added to signs of constituents included in the given zone Zn. Those having no suffix in particular in the following explanation relate to all the zones (Z1, Z2, ..., Zn-1, Zn, Zn+1, ...).

As mentioned above, each zone Z is provided with the controller 26, which is, more specifically, constructed in general as a computer having a central processing unit CPU, main storage devices RAM (Random Access Memory) and ROM (Read Only Memory), input/output devices (I/O) for receiving information from the sensor 22 of the zone Z and its adjacent upstream and downstream controllers 26 and transmitting control instruction signals to a drive for the motor 20 in the zone Z and information from the controller 26 to its adjacent upstream and downstream controllers 26, and the like.

The controller 26 can functionally be considered as one constructed by a distance estimation unit, an article presence detecting unit, and a control input switch unit. These functional units can be achieved by reading predetermined computer software onto hardware such as CPU and RAM, so that the CPU causes the input/output devices to operate, while reading and writing data in the RAM, ROM, and auxiliary storage devices, and performs arithmetic processing.

According to the passing timings of two articles adjacent to each other detected by the sensor 22, the distance estimation unit estimates information concerning the distance between the two articles adjacent to each other. Specifically, the distance estimation unit in the controller 26n in the zone Zn illustrated in Fig. 2 acquires sensor information (detection information) indicating timings (times, counter values, and the like) at which the articles have passed as detected by the sensor 22n in the same zone Zn from the sensor 22n and calculates the distance between the articles according to this information. Then, the distance estimation unit transmits distance information concerning the calculated distance between the articles to the control input switch unit in the same controller 26n. The distance estimation unit also transmits the information detected by the sensor 22n to the article presence detecting unit in the controller 26n+1 in the downstream zone Zn+1.

The article presence detecting unit detects whether or not an article to be conveyed is present in the zone Zn. Specifically, the article presence detecting unit in the controller 26n in the zone Zn illustrated in Fig. 2 acquires sensor information indicating a timing (time, counter value, or the like) at which an article, if any, has passed as detected by the sensor 22n-1 in the upstream adjacent zone Zn-1 from the sensor 22n-1 through the controller 26n-1 in this zone Zn-1 and, after the lapse of a predetermined time therefrom, determines that the article has moved to the zone Zn and is present therein. Once determined presence of the article, it will continuously be determined the presence until the lapse of a predetermined time corresponding to the operation state of the motor 20n in the zone Zn, for example.

The article presence detecting unit also transmits article presence information indicating whether or not an article is present in the zone Zn to the control input switch unit and also sends this article presence information as article upstream presence information and article downstream presence information to the upstream controller 26n-1 and downstream controller 26n+1, respectively.

The control input switch unit switches a control instruction (control input) to be output to the motor 20n in the zone Zn. Specifically, the control input switch unit in the controller 26n in the zone Zn illustrated in Fig. 2 switches the control instruction transmitted to the motor 20n in the zone Zn according to the distance information from the distance estimation unit, the article presence information from the article presence detecting unit, the article upstream presence information received from the controller 26n-1 in the upstream zone Zn-1, and the article downstream presence information and downstream operation information received from the controller 26n+1 in the downstream zone Zn+1. In this embodiment, the control input switch unit switches the control instruction among three stages of "stop," "normal speed operation," and "high speed operation."

The control input switch unit also transmits information of the control instruction to be output to the motor 20n in the zone Zn as downstream operation information to the upstream controller 26n-1.

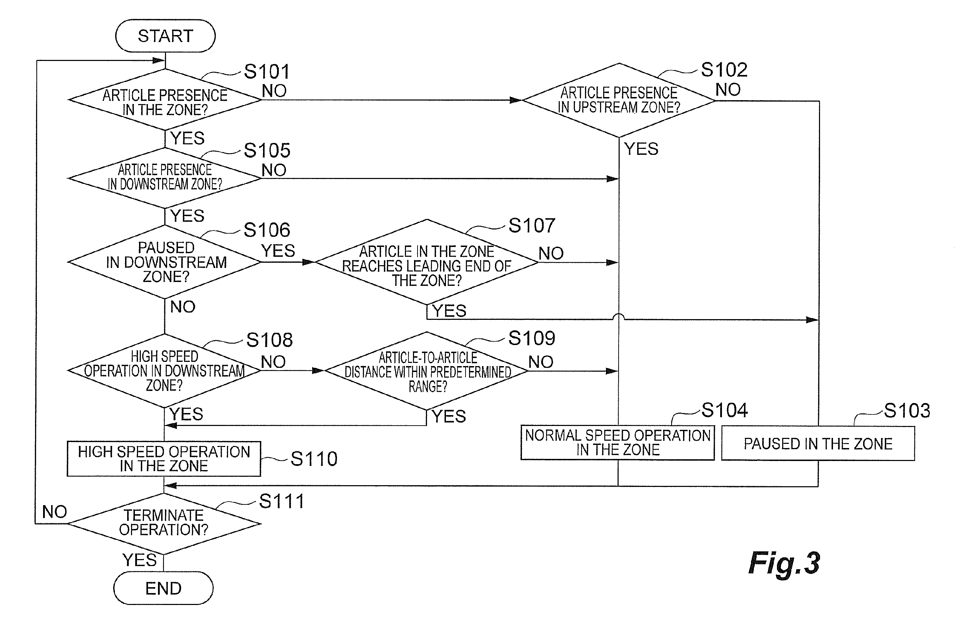

Referring to Fig. 3, processing of the CPU in the controller 26, functionally, processing for switching the control instruction by the control input switch unit in the controller 26 in particular, will now be explained in more detail. Fig. 3 is a flowchart illustrating processing executed by the CPU in the controller 26n in the zone Zn. Each controller 26 in the accumulation conveyor 10 starts this flow after the sensor 22a disposed on the uppermost stream side of the accumulation conveyor 10 in Fig. 1 has detected the passing of an article. The initial state of the control instruction to each motor 20 is "stop." That is, the operation is stopped throughout the accumulation conveyor 10 at the start of the flow.

First, with reference to the article presence information determined by the CPU (in other words the article presence information from the article presence detecting unit), it is determined whether or not an article is present in the zone Zn (S101). When no article is in the zone Zn, the flow shifts to step S102. When an article is present, the flow shifts to step S105.

Next, with reference to the article upstream presence information received from the upstream controller 26n-1, it is determined whether or not an article is presnet in the upstream zone Zn-1 (S102). When no article is in the upstream zone Zn-1, the operation signal to the motor 20 in the zone Zn is set to "stop" (S103). When an article is in the upstream zone, the control instruction to the motor 20n in the zone Zn is set to "normal speed operation" (S104). This sequentially causes the zones Z to start at normal speed.

When it is acknowledged at step S101 that an article is present in the zone Zn, it is determined whether or not an article is present in the downstream zone Zn+1 with reference to the article downstream presence information received from the downstream controller 26n+1 (S105). When an article is in the downstream zone Zn+1, the flow shifts to step S106. When no article is present, the control instruction to the motor 20n in the zone Zn is kept at "normal speed operation" (S104).

When it is acknowledged at step S105 that an article is present in the downstream zone Zn+1, it is determined whether or not the downstream zone Zn+1 is in the stopped state with reference to the downstream operation information received from the downstream controller 26n+1 (S 106). The flow shifts to steps S 107 and S108 when the downstream zone Zn+1 is in the stopped state and not (but in the normal or high speed operation), respectively.

When it is acknowledged at step S106 that the downstream zone Zn+1 is in the stopped state, it is determined whether or not the article is present in the zone Zn reaches the leading end of the zone, i.e., the most downstream part of the zone Zn (S107). Specifically, when the sensor 22n in the zone Zn detects an article, it is determined that the article reaches the leading end of the zone. When the article reaches the leading end of the zone, the control instruction to the motor 20n in the zone Zn is set to "stop" (S103). When it does not reach there, the control instruction to the motor 20n in the zone Zn is set to "normal speed operation" (S104).

When it is acknowledged at step S106 that the downstream zone Zn+1 is not in the stopped state but in the normal or high speed operation, it is determined whether or not the downstream zone Zn+1 is in the high speed operation with reference to the downstream operation signal (S108). When the downstream zone Zn+1 is in the high speed operation, the control instruction to the motor 20n in the zone Zn is also set to "high speed operation" (S110). When the downstream zone Zn+1 is not in the high speed operation (i.e., is in the normal operation), the flow shifts to step S 109.

When it is acknowledged at step S108 that the downstream zone Zn+1 is not in the high speed operation, according to distance information between two articles adjacent to each other, it is determined whether or not the article-to-article distance falls within a predetermined range (S109). Specifically, the distance information is taken into consideration in terms of the article-to-article distance GAP. Let Lmin be the minimum distance at which a subsequent article is not required to accelerate and come into close contact with a preceding article, and Lmax be the maximum gap (e.g., the length of one zone) at which it can be determined that the subsequent article fails to catch up with the preceding article even if accelerated. In this case, it is determined that the article-to-article distance falls within the predetermined range when the condition of Lmin < GAP < Lmax holds. Here, the minimum value Lmin is set for the article-to-article distance GAP in order to prevent the downstream article from being continuously pushed and damaged when the articles are substantially in close contact with each other while the upstream article is kept accelerating. When the article-to-article distance falls within the predetermined range, the control instruction to the motor 20n in the zone Zn is set to "high speed operation" (S110). When the article-to-article distance is on the outside of the predetermined range, the control instruction to the motor 20n in the zone Zn is set to "normal speed operation" (S104).

After the control instruction to the motor 20n in the zone Zn is switched to "stop," "normal speed operation," or "high speed operation" at step S 103, S104, or S110, according to whether or not an operation termination instruction is received from the outside, for example, it is determined whether or not to terminate the operation of the accumulation conveyor 10 (S111). When not terminating the operation, the flow returns to step S101, so as to repeat the processing. When terminating the operation, the processing is ended.

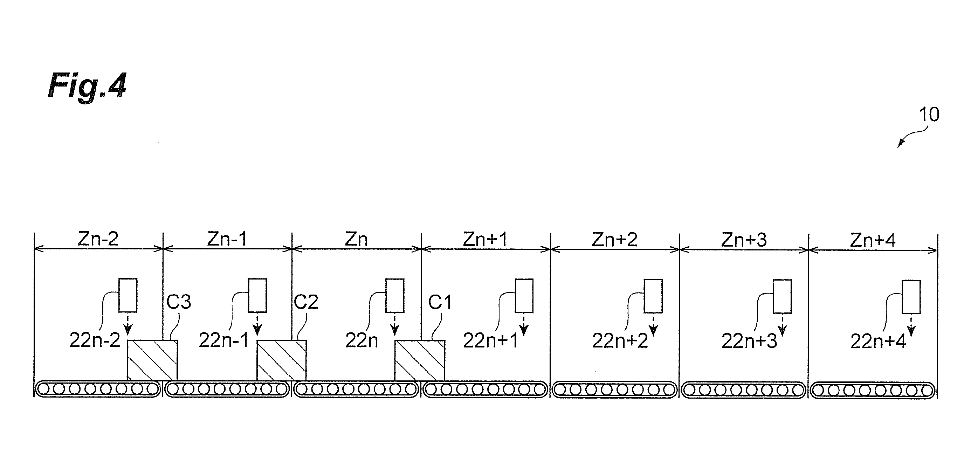

Since the CPU in the controller 26n executes such processing, the accumulation conveyor 10 operates as in Figs. 4 to 7 represented by way of example.

First, when there are articles C1, C2 in the zone Zn and its upstream zone Zn-1, respectively, while no article exists in the downstream zone Zn+1 as illustrated in Fig. 4, the zones Zn-1, Zn are operated at normal speed, and the downstream zone Zn+1 also starts a normal operation. As a consequence, the articles C1, C2 are conveyed downstream while keeping a fixed distance L1 therebetween.

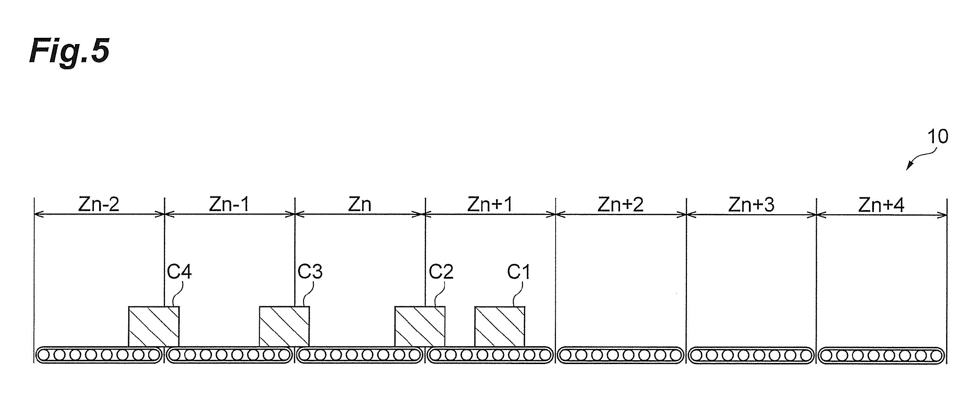

Subsequently, when transferred to the downstream zone Zn+1, the article C1 is conveyed thereon at normal speed. When the article C2 enters the zone Zn, on the other hand, the controller 26n in the zone Zn proceeds from the step S101 in Fig. 3 to the step S110 through the steps S105, S106, and S108, so as to operate the zone Zn at high speed. This causes the article C2 on the zone Zn to advance at the high speed, so as to approach the article C1 conveyed at the normal speed (see Fig. 5).

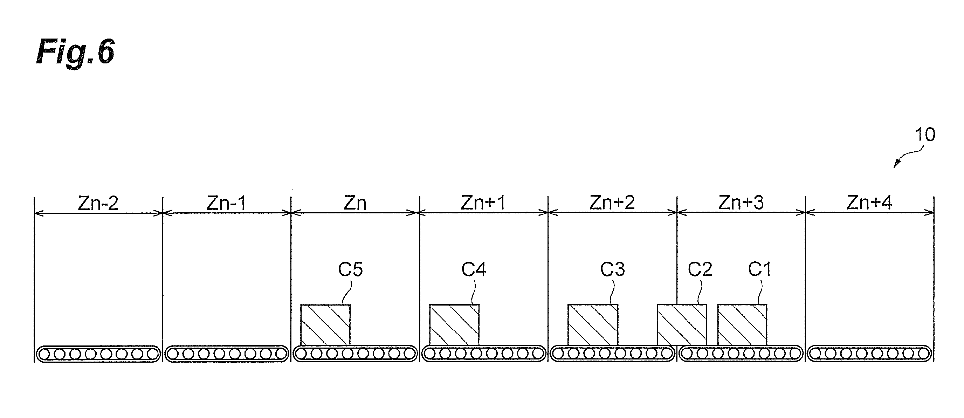

Thus, while the leading article C1 is conveyed at the normal speed, the subsequent article C2 advances at the high speed and then approaches the article C1 as illustrated in Fig. 6. It can easily be seen that, when the article C2 is at the high speed, its subsequent article C3 will also be switched to the high speed operation so as not to increase the distance to the article C2 if the distance falls within a predetermined range (steps S 106, S 108, S 109, and S110). When the distance between the articles C1, C2 is less than the predetermined minimum distance Lmin, the conveying speed of the article C2 is returned to the normal speed, so that the articles C1 and C2 are conveyed at the normal speed while in close contact with each other (steps S108, S109, and S104).

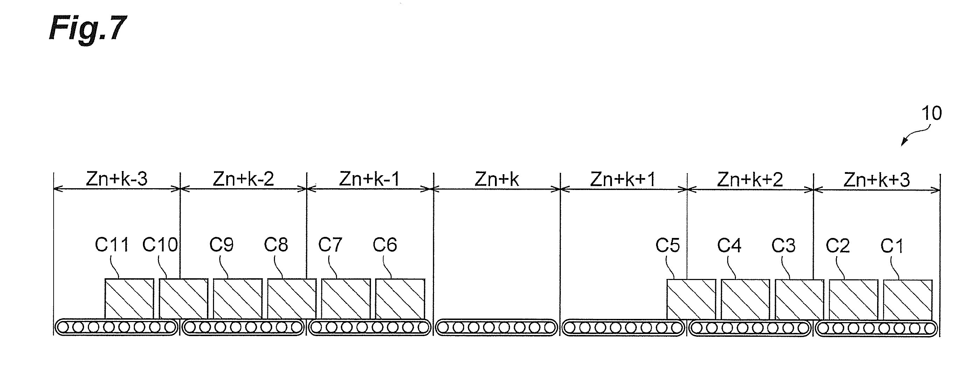

While the subsequent articles C3, C4, C5 also come into close contact with the articles C1, C2 as the foregoing is repeated, a plurality of article groups C1 to C5, C6 to C11 are formed as illustrated in Fig. 7 when the distance from the article C5 to the subsequent article C6 exceeds the predetermined maximum distance Lmax. However, it will easily be seen that, even when the leading article group C1 to C5 and the subsequent article group C6 to C11 are separated from each other as illustrated in Fig. 7, if the leading article group C1 to C5 is in a waiting state at the most downstream part of the accumulation conveyor 10, the subsequent article group C6 to C11 will approach the leading article group C1 to C5, so as to integrate therewith.

To summarize the foregoing, the controller 26 can perform the following conveyance control for articles:
(1) In the case where articles are present in the zone Zn and its downstream zone Zn+1 while the downstream zone Zn+1 is in the normal speed operation, the zone Zn is switched to the high speed operation when the article-to-article distance GAP falls within the predetermined range (Lmin < GAP < Lmax), so as to reduce the article-to-article distance.
(2) In the case where articles are present in the zone Zn and downstream zone Zn+1 while the downstream zone Zn+1 is in the high speed operation, the zone Zn is also switched to the high speed operation, so as to prevent the article-to-article distance from increasing. That is, when a given zone in the accumulation conveyor 10 is switched to the high speed operation, all of its upstream zones in which articles are continuously present are switched to the high speed operation, so that the distance between given two articles adjacent to each other can favorably be reduced while the subsequent articles keep the distance therebetween.

As explained in the foregoing, the accumulation conveyor 10 in accordance with this embodiment can minimize the distance between articles, so as to place a plurality of articles in one zone, thereby increasing the amount of retention of articles per fixed length (e.g., per zone), which improves the accumulation efficiency. This can also convey a plurality of articles densely as a mass, so as to increase the amount of conveyance per fixed length, thereby improving the conveyance efficiency. Such a control can be achieved by simply switching the control input to the motor 20n in the zone Zn, so that complicated controls such as conventional speed feedback controls are unnecessary, whereby there are no restrictions on specs of constituents such as the response speed of the motor 20n. As a result, a simple structure can favorably reduce the distance between articles, thereby improving efficiencies in accumulation and conveyance.

Since the distance between articles can be made very small, even when there is a high-speed sorter on the downstream side of the accumulation conveyor 10, a plurality of articles retained on the conveyor 10 can be let out to the sorter at high speed, whereby the sort-out time for the sorter can be minimized. It also eliminates the idea of retaining one article in one zone as in the conventional accumulation conveyors, so that the length of one zone Z can be set freely independently of the size of articles C; for example, the length of one zone Z can be made greater, so as to reduce the number of motors 20, sensors 22, and controllers 26 in the whole conveyor 10, thereby cutting down the cost.

The hardware structure of the controller 26 may be such that a driver for the motor 20 is contained within the controller 26.

A control similar to that mentioned above can also be performed by a single integrated controller according to a technology using a network circuit such as CANopen (registered trademark) and Ethernet without providing the controller 26 for each zone Z.

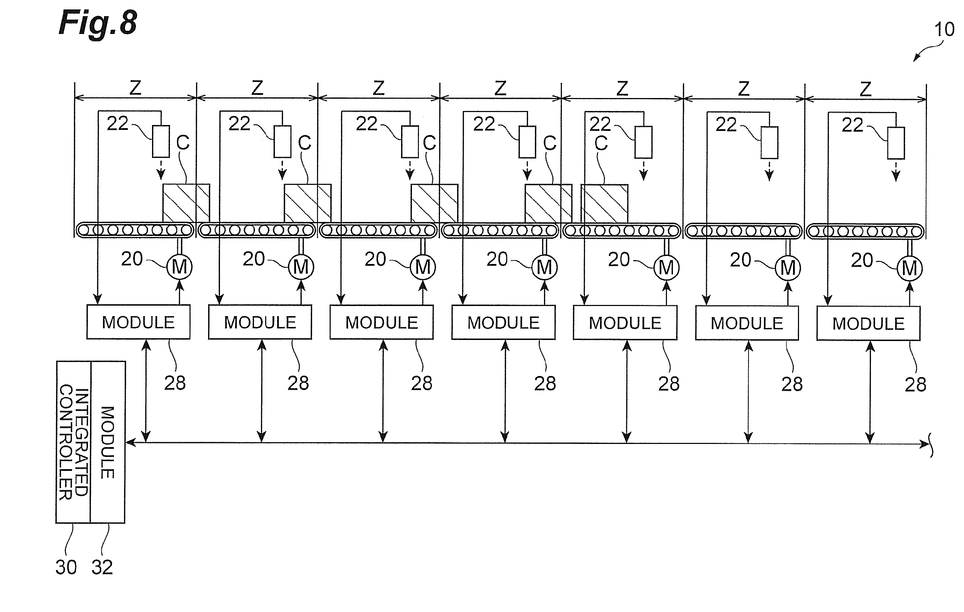

Fig. 8 illustrates an example of the above, in which communication modules (slave stations) 28, provided for the respective zones Z, are connected to the motors 20 and sensors 22 in their corresponding zones Z and to a communication module (master station) 32 of an integrated controller 30. The integrated controller 30 is basically constructed by CPU, RAM, ROM, and input/output devices as with the above-mentioned controllers 26 and uses a similar control logic with respect to the motor 20 and sensor 22 in each zone Z, but differs therefrom in that it receives information items from the communication module 32, arithmetically processes the information items at one place in the integrated controller 30, and then issues the results to the communication module 32.

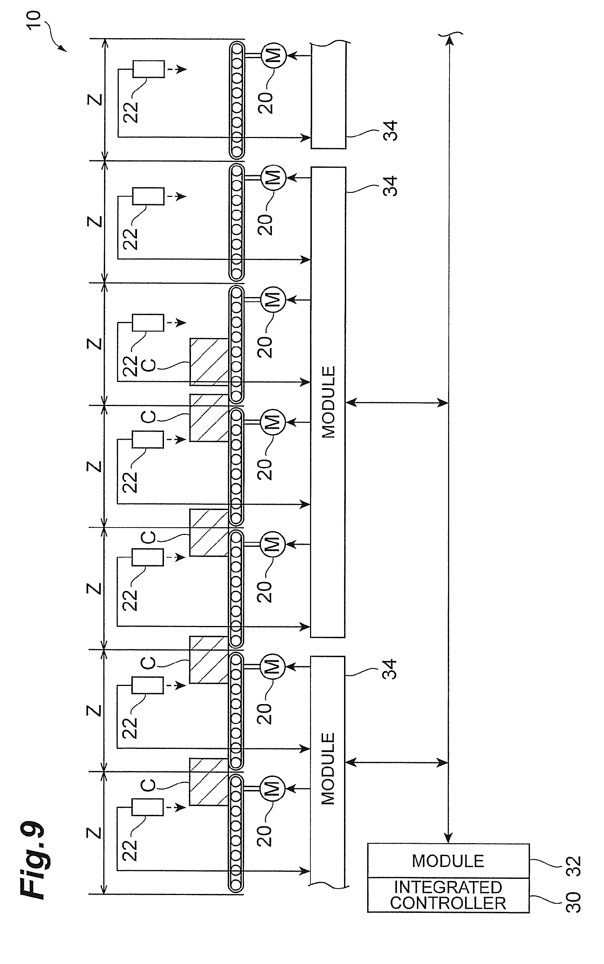

Fig. 9 illustrates an example using a network technology with two network layers, which is constructed such that information signals/control signals for the integrated controller 30 are transmitted/received to/from communication modules 34 each provided for a plurality of (4 in the depicted embodiment) zones Z. Such a structure can also perform a control similar to that in the above-mentioned embodiment in which each zone Z is provided with the controller 26.

While the accumulation conveyor 10 in accordance with the present invention has been explained with reference to its preferred embodiments in the foregoing, the present invention is not limited to the above-mentioned embodiments. For example, the kinds of control inputs switched by the control input switch unit in the controller 26 are not limited to the normal mode (normal speed operation) and high speed mode (high speed operation) as mentioned above, but may be the normal mode (normal speed operation) and a low speed mode (low speed operation). In this case, a zone is decelerated according to information detected by its upstream sensor. The distance between articles may be reduced more efficiently in a multistage manner according to sizes of distance information between two articles adjacent to each other calculated by the distance estimation unit. Stopping is also one of alternatives as a deceleration stage in the zone.

While the above-mentioned embodiments have been explained as a system in which the motor 20, which is a drive means, and carrier rollers 18 are arranged separately from each other and synchronized with each other through an endless belt, a roller having a motor built in one carrier roller (a roller with a built-in motor) can also be used.

The accumulation conveyor 10 may also be of a roller conveyor type which conveys articles by driving carrier rollers 18 to rotate without winding the belts 14 around the carrier rollers 18.

### Reference Signs List

10 ... accumulation conveyor; 18 ... carrier roller; 20 ... motor (drive means); 22 ... sensor (detection means); 26... controller (control means); 28... communication module (slave station); 30... integrated controller; 32... communication module (master station); 34... communication module; C ... article to be conveyed; Z... zone

## Claims

1. An accumulation conveyor (10) for conveying or stopping an article to be conveyed (C) by controlling rotations of a plurality of carrier rollers (18), disposed parallel to each other so as to form a conveying path, in each of a plurality of zones (Z);
the accumulation conveyor comprising:
drive means (20), provided for each zone (Z), for driving a carrier roller (18) constituting the zone (Z) to rotate;
detection means (22), provided for each zone (Z), for detecting passing of the article (C); and
control means (26) for controlling the drive means (20) so as to switch a conveying speed in the zone (Z) according to detected information from the detection means (22) such that a subsequent article to be conveyed (C) approaches a preceding article to be conveyed (C).

2. An accumulation conveyor according to claim 1, wherein the control means (26) is provided for each zone (Z); and
wherein the control means (26) in each zone (Zn) controls the drive means (20n) in the zone (Zn) according to detected information from the respective detection means (22n-1, 22n, 22n+1) provided for the zone (Zn), a zone (Zn-1) adjacent upstream thereto, and a zone (Zn+1) adjacent downstream thereto.

3. An accumulation conveyor according to claim 2, wherein the control means in each zone (Zn) estimates distance information concerning a distance between the article (C) on the zone (Zn) and the article (C) on the zone (Zn+1) adjacent downstream thereto according to the detected information from the respective detection means (22n, 22n+1) provided for the zone (Zn) and the zone (Zn+1) adjacent downstream thereto and controls the drive means (20n) of the zone (Zn) so as to increase a conveying speed in the zone (Zn) when the estimated distance information falls within a predetermined range.

4. An accumulation conveyor according to claim 2, wherein the control means in each zone (Zn) estimates distance information concerning a distance between the article (C) on the zone (Zn) and the article (C) on the zone (Zn-1) adjacent upstream thereto according to the detected information from the respective detection means (22n, 22n-1) provided for the zone (Zn) and the zone (Zn-1) adjacent upstream thereto and controls the drive means (20n) of the zone (Zn) so as to decrease a conveying speed in the zone (Zn) when the estimated distance information falls within a predetermined range.

5. An accumulation conveyor according to claim 1, wherein the control means is provided solely and connected to the drive means (20) and detection means (22) in the zones (Z) through a network circuit.
